(19) Europäisches Patentamt / European Patent Office / Office européen des brevets

(11) **EP 3 454 589 A1**

(12) **EUROPEAN PATENT APPLICATION**

(43) Date of publication:
**13.03.2019 Bulletin 2019/11**

(51) Int Cl.:
***H04W 24/02*** *(2009.01)*   ***H04W 16/02*** *(2009.01)*

(21) Application number: **17198956.9**

(22) Date of filing: **27.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.09.2017 US 201715700162**

(71) Applicant: **Hewlett Packard Enterprise
Development LP
Houston, TX 77070 (US)**

(72) Inventors:
• **Hahn, Dongwoon
Santa Clara, CA California 95054 (US)**
• **Mercier, Mathieu
St. Laurent, H4S 0A4 (CA)**
• **Ganu, Sachin
Santa Clara, CA California 95054 (US)**
• **Muniyappa, Nethra
Santa Clara, CA California 95054 (US)**
• **Harsha, Sree
Santa Clara, CA California 95054 (US)**
• **Balay, Rajini
Santa Clara, CA California 95054 (US)**

(74) Representative: **Liesegang, Eva
Boehmert & Boehmert
Anwaltspartnerschaft mbB
Pettenkoferstrasse 22
80336 München (DE)**

(54) **NETWORK STABILITY STATUS**

(57)     A method related to a network stability status may include determining, by a network controller, a stability status of a network. The method may further include dynamically determining a plurality of simulated annealing parameters associated with the network based, at least in part, on the stability status of the network. In some examples, the method may further include using, at least in part, the plurality of simulated annealing parameters to optimize a network configuration.

EP 3 454 589 A1

## Description

Background

Wireless networks can include hardware components that send and receive signals over various channels. In order to reduce signal interference, a network configuration of the wireless network may be altered.

Brief Description of the Drawings

Figure 1 illustrates an example of an apparatus consistent with the disclosure.
Figure 2 illustrates an example flow diagram of a method consistent with the disclosure.
Figure 3 illustrates an example non-transitory machine-readable medium consistent with the disclosure.

Detailed Description

A wireless network may exhibit multiple stability states (e.g., wireless network deployment states), which may be referred to herein as a "stability status" or "stability statuses." Such stability statuses may include a "green" field deployment state/unstable state, which may occur after a network disruption such as relocation of network radios, network structure changes, etc., and a stable state. In some examples, the stability status of a network may be determined manually (e.g., via user interaction), or automatically (e.g., by observing the number of radios in the network, a number of channel changes that have transpired within the network, and/or a degree to which radio statistic measurements change). As used herein, a "radio" is an antenna or aerial which converts electric power into electromagnetic waves and vice versa.

In some examples, the stability status may be defined by a channel plan for the network. The channel plan may include a list of channels which will be used to send and/or receive network traffic. In some examples, the stability status may be based on an initial state of the network. For example, the stability status may be based on whether the network is in a stable operating mode or an unstable operating mode. In some examples, an initial stability status may correspond to a current operational channel plan of the network. This may allow for a minimization of channel changes during performance of a simulated annealing operation. In some other examples, an initial stability status may be determined by performing an optimization operation (e.g., a random search) for a threshold number of iterations. As used herein, simulated annealing (SA) generally may refer a probabilistic technique for approximating the global optimum of a given function, e.g., as a metaheuristic to approximate global optimization in a large search space when the search space is discrete. Simulated annealing can be used to create a channel plan in a wireless local area network, for example.

The initial state of the network may be determined based on whether the network is exhibiting a stable stability status or an unstable stability status. For example, if the network is exhibiting a stable stability status, the current channel plan may be used as the initial state of the network. However, if the network is exhibiting an unstable stability status, the quality of the current channel plan may be limited. In this case, a "cheap" optimization such as a random search may be used to quickly determine an initial state of the network. In some examples, the "cheap" optimization search may use less computational resources than a simulated annealing operation.

When the network exhibits an unstable stability status, there may be a greater chance to improve the quality of a channel plan more significantly than when the network exhibits a stable stability status. In some examples, when new radios are installed in the network, or the network environment is updated, the stability status can switch from stable to unstable. As described in more detail, herein, simulated annealing parameters may be adjusted and/or selected based, at least in part, on the stability status of the network.

For example, when the network exhibits an unstable stability status, simulated annealing may be performed to search for neighboring solutions at a greater distance than when the network exhibits a stable stability status. In such examples, the simulated annealing parameters may be selected in a way that favors quality of solution over computation time. In contrast, when the network exhibits a stable stability status, the simulated annealing parameters may be selected in a way that favors minimizing computation time over quality of solution.

Channel assignment (e.g., assigning channels to be used by the network in a channel plan) in wireless networks can be accomplished in a way that seeks to minimize a cost function. For example, a global channel frequency resource assignment for a wireless network can be effected in a manner that seeks to reduce a cost function corresponding to assigning channels in the wireless network. This may allow for channel selection in the wireless to be optimized based on the cost function. In some examples, such optimization may be achieved using optimization techniques such as simulated annealing.

In simulated annealing, multiple optimization parameters may be used. These parameters may affect the quality of the optimization (e.g., the simulated annealing parameters may affect the quality of an optimization operation performed on the network). Examples of simulated annealing parameters that may be used and/or considered in examples of the disclosure include an optimization time budget, a move function, a cooling schedule (which may be determined in terms of a maximum and minimum temperature, as described in more detail, herein), the stability status of the network (e.g., an initial stability status state of the network), temperatures, acceptance functions, etc. The simulated annealing parameters used may be different depending on the stability status of the network. Accordingly, the simulated annealing parameters to be used to perform an optimization operation on the network may be determined dynamically based on the stability status of the network. Various simulated annealing parameters are further described and defined below.

One parameter that may be considered for a simulated annealing operation is an energy cost corresponding to optimizing the network configuration. In some examples, the energy cost may be defined based on the objectives of the channel plan. For example, the energy cost may be based on a desired network coverage. As an example, in some deployments certain channels may be less desirable than others for various reasons, and the objectives of the channel plan may include not using certain channels based on their properties.

In some examples, a distance may be considered when performing the simulated annealing operation(s). The distance may be based on a measure of the dissimilarity between two stability statuses (e.g., network states). In some examples, the distance may be based on a number of radios with different channels between two or more stability statuses. Although the distance may be based on the simulated annealing temperature, the range of distance may be dynamically selected based, at least in part, on the stability status of the network.

A move function may also be used as a simulated annealing parameter. The move function may be based on a cost corresponding to altering a configuration of the network at a given distance. In some examples, the distance and/or move function may be determined based on the stability state of the network. For example, when the network is exhibiting a stable stability state, the maximum distance value may be larger than when the network is exhibiting an unstable stability status.

In some examples, at a maximum temperature, when the when the network is exhibiting a stable stability status up to 10% of the radios in the network can change their channel in a move operation. However, when the network is exhibiting an unstable stability status, up to 50% of the radios in the network can change their channel in a move operation. Examples are not so limited; however, and more than 10% or less than 10% of the radios may change their channel in a move operation when the network is exhibiting a stable stability status, and more than 50% or less than 50% of the radios may change their channel when the network is exhibiting an unstable stability status.

In some examples, a simulated annealing temperature may be used in performing the simulated annealing operation(s). The temperature may be gradually reduced as the simulated annealing operation progresses. For example, an initial temperature and a final temperature may be determined for performing the simulated annealing operation. As the simulated annealing operation is performed, the temperature may be gradually reduced from the initial temperature to the final temperature. The rate at which the temperature is reduced from the initial temperature to the final temperature may be referred to as the speed of cooling. When the speed of cooling is greater, computation time may be reduced at the expense of solution quality; however, when the speed of cooling is lower, quality of the solution may be improved at the expense of greater computation time.

In some examples, a maximum temperature for simulated annealing may be determined. The maximum temperature may correspond to the initial temperature. When the network is exhibiting a stable stability status, a greater maximum temperature may be used for simulated annealing than when the network is exhibiting an unstable stability status.

At the outset of performing simulated annealing, a simulated annealing schedule may be generated. In some examples, the simulated annealing schedule may be dynamically and/or automatically generated. As described above, a number of simulated annealing operations may be performed to determine the simulated annealing temperature. When the network is exhibiting a stable stability status, a fewer number of simulated annealing operations and/or less time may be spent performing simulated annealing operations than when the network is exhibiting an unstable stability status.

Simulated annealing may be performed according to an annealing schedule. The annealing schedule may be a representation of an amount of time in which simulated annealing is performed to optimize a network configuration. In some examples, a faster annealing schedule may be used when the network is exhibiting a stable stability status than when the network is exhibiting an unstable stability status. For example, when the network is exhibiting a stable stability status, an annealing schedule in which a maximum simulated annealing temperature (T) is on the order of the initial temperature (TO) divided by k, where k is some constant such as Boltz-

man's constant: $T \sim \dfrac{T0}{k}.$ When the network is exhibiting an unstable stability status, an annealing schedule in which a maximum simulated annealing temperature (T) is on the order of the initial temperature (TO) divided by the log of k: $T \sim \dfrac{T0}{\log(k)}.$

Examples of the disclosure include machine-readable media, apparatuses, and methods related to a network stability status. In some examples, a method related to a network stability status may include determining, by a network controller, a stability status of a network. As used herein, a network controller refers to a hardware component that facilitates connection of a user device (e.g., a computer, smartphone, laptop, tablet, etc.) to a computer network (e.g., a wireless local area network). The method may further include dynamically determining a plurality of simulated annealing parameters associated with the network based, at least in part, on the stability status of the network. In some examples, the method may further include using, at least in part, the plurality of simulated annealing parameters to optimize a network configuration.

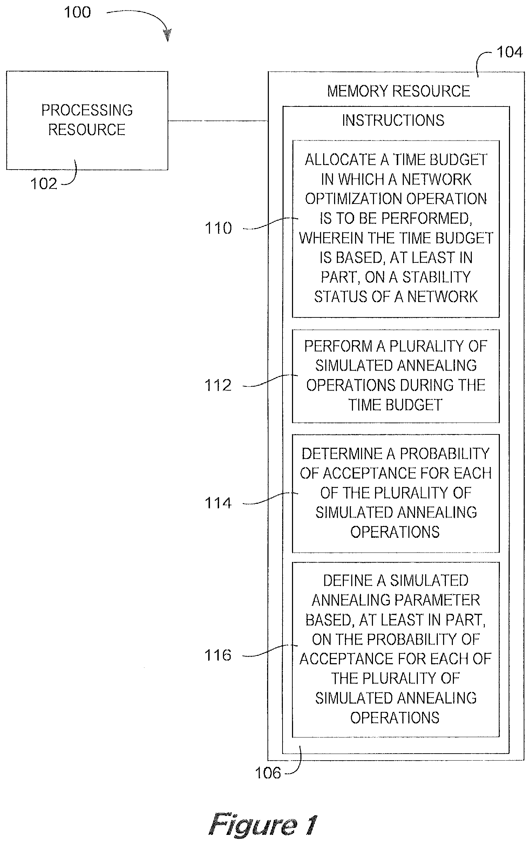

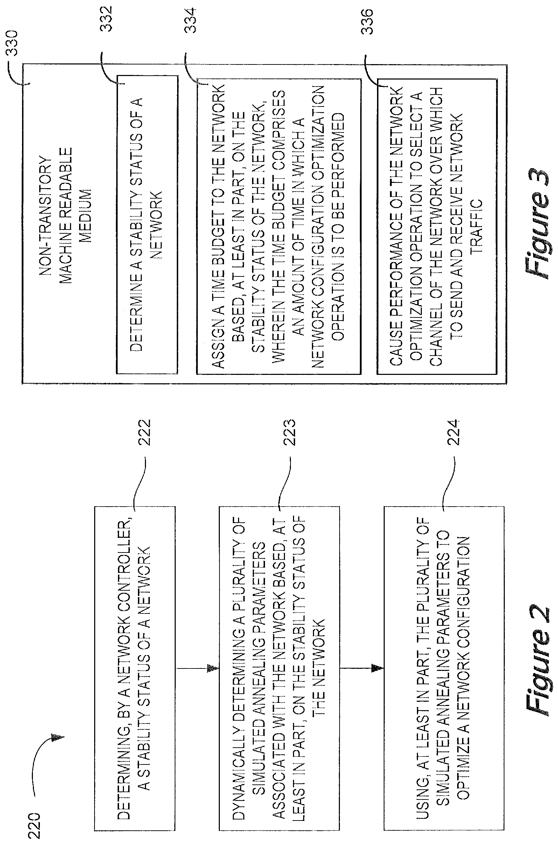

The figures herein follow a numbering convention in which the first digit corresponds to the drawing figure number and the remaining digits identify an element or component in the drawing. For example, reference numeral 104 may refer to element "04" in Figure 1 and an analogous element may be identified by reference numeral 204 in Figure 2. Elements shown in the various figures herein can be added, exchanged, and/or eliminated so as to provide a number of additional examples of the disclosure. In addition, the proportion and the relative scale of the elements provided in the figures are intended to illustrate the examples of the disclosure, and should not be taken in a limiting sense.

Figure 1 illustrates an example of an apparatus 100 consistent with the disclosure. As shown in Figure 1, the apparatus 100 includes a processing resource 102 and a memory resource 104. In some examples, the apparatus 100 may be a network controller, and the processing resource 102 and the memory resource 104 may comprise the network controller, or the processing resource 102 and the memory resource 104 may be part of the network controller.

The processing resource 102 may be a hardware processing unit such as a microprocessor, application specific instruction set processor, coprocessor, network processor, or similar hardware circuitry that can cause machine-readable instructions to be executed. The memory resource 104 may be any type of volatile or non-volatile memory or storage, such as random access memory (RAM), flash memory, read-only memory (ROM), storage volumes, a hard disk, or a combination thereof.

The memory resource 104 may store instructions 106 thereon. When executed by the processing resource 102, the instructions 106 may cause the apparatus 100 to perform specific tasks and/or functions. For example, at block 110, the memory resource 104 may store instructions 106 which may be executed by the processing resource 102 to cause the apparatus 100 to allocate a time budget in which a network optimization operation is to be performed, wherein the time budget is based, at least in part, on a stability status of a network. The time budget may alternatively be referred to herein as an optimization time budget.

At block 112, the memory resource 104 may store instructions 106 which may be executed by the processing resource 102 to cause the apparatus 100 to perform a plurality of simulated annealing operations during the time budget. For example, simulated annealing operations may be performed iteratively for the duration of the time budget.

At block 114, the memory resource 104 may store instructions 106 which may be executed by the processing resource 102 to cause the apparatus 100 to determine a probability of acceptance for each of the plurality of simulated annealing operations. The probability of acceptance may be based on the probability of randomly selecting a defective state out of a given number of states.

In some examples, determining the probability of acceptance may include evaluating an acceptance function. The acceptance function may be used to determine whether to accept a new network configuration (e.g., whether to select a new channel) based on whether or not the new network configuration is better or worse than the current network configuration. A new network configuration being better than a previous network configuration may include the new network configuration providing a lower cost or reduced opportunity for network conflict than the previous network configuration. In some examples, the probability of acceptance may depend on the stability status. For example, a different probability of acceptance may be different when the network is exhibiting a stable stability status than when the network is exhibiting an unstable stability status.

The simulated annealing temperature (e.g., the maximum simulated annealing temperature) may be determined by using a greater threshold acceptance value when the network is exhibiting an unstable stability status than when the network is exhibiting a stable stability status. The maximum simulated annealing temperature may be defined as the temperature at which X% of the solution is acceptable. In some examples, when the network is exhibiting an unstable stability status, the maximum temperature for simulated annealing may be defined as the temperature at which 99% of the solution is acceptable. In contrast, when the network is exhibiting a stable stability status, the maximum temperature for simulated annealing may be defined as the temperature at which 90% of the solution is acceptable, for example.

At block 116, the memory resource 104 may store instructions 106 which may be executed by the processing resource 102 to cause the apparatus 100 to define a simulated annealing parameter based, at least in part, on the probability of acceptance for each of the plurality of simulated annealing operations. The simulated annealing parameter may be an initial simulated annealing temperature and/or a final simulated annealing temperature. The memory resource 104 may store instructions 106 which may be executed by the processing resource 102 to cause the apparatus 100 to perform an operation to optimize a network configuration based, at least in part, on the simulated annealing parameter.

In some examples, the simulated annealing temperature may be determined by performing a number of simulated annealing operations. A percentage of accepted and rejected solutions from the number of simulated annealing operations may be determined and used in determining the simulated annealing temperature (e.g., the initial simulated annealing temperature and/or the final simulated annealing temperature). In some examples, the amount of computation time used in determining the simulated annealing temperature may be bounded by some threshold amount of time. The threshold amount of time used for determining the simulated annealing temperature may be lower when the stability status of the network is stable than when the stability status of the network is unstable. For example, a smaller number of simulated annealing operations may be performed to determine the simulated annealing temperature when the network exhibits a stable stability status than when the network exhibits an unstable stability status.

In some examples, the memory resource 104 may store instructions 106 which may be executed by the processing resource 102 to cause the apparatus 100 to determine that the time budget has expired and responsive to the determination, define a simulated annealing temperature based, at least in part, on historical simulated annealing optimization data. For example, if simulated annealing parameters are not defined within the time budget, simulated annealing parameters, such as a simulated annealing temperature, from a previous optimization may be used. For example, a simulated annealing temperature that was determined from a previous optimization operation may be used if simulated annealing parameters are not defined within the time budget. If the time budget is not exceeded, the optimization operation may be concluded when the current temperature is less than or equal to the final temperature.

The memory resource 104 may store instructions 106 which may be executed by the processing resource 102 to cause the apparatus 100 to determine the stability status of the network based on at least one of an energy of an optimization solution associated with the network, a number of radios associated with the network, an age of at least one radio associated with the network, and/or information from monitoring radio events.

In some examples, the memory resource 104 may store instructions 106 which may be executed by the processing resource 102 to cause the apparatus 100 to determine that the stability status of the network is stable and, responsive to the determination that the network is stable, select a first distance to perform a move operation to optimize a configuration of the network. Examples are not so limited; however, and in some examples, the memory resource 104 may store instructions 106 which may be executed by the processing resource 102 to cause the apparatus 100 to determine that the stability status of the network is unstable and, responsive to the determination that the network is unstable, select a second distance to perform a move operation to optimize a configuration of the network. In some examples, the first distance may be less than the second distance.

Figure 2 illustrates an example flow diagram of a method 220 consistent with the disclosure. At block 222, the method 220 may include determining, by a network controller, a stability status of a network. The stability status may be based on whether the network is stable or unstable.

At block 224, the method 220 may include dynamically determining a plurality of simulated annealing parameters associated with the network based, at least in part, on the stability status of the network. In some examples, dynamically determining the plurality of simulated annealing parameters includes dynamically determining at least one of an energy, a distance, and a move function associated the network. In some examples, the method 220 may include dynamically determining an initial state of simulated annealing based, at least in part, on the stability status of the network. In some examples, dynamically determining the initial state of the simulated annealing may include dynamically determining at least one simulated annealing parameter (e.g., a simulated annealing temperature).

At block 226, the method 220 may include using, at least in part, the plurality of simulated annealing parameters to optimize a network configuration. In some examples, using the plurality of simulated annealing parameters to optimize the network configuration may comprise optimizing the network to select a channel of the network over which to send and receive network traffic.

In some examples, optimization may be done for a plurality of wireless networks. The plurality of optimized wireless networks may be represented by a data structure such as a connected network graph, tree, array, or other suitable data structure. In this example, the network device (e.g., a network controller) responsible for performing the optimization may perform the optimization for each of the plurality of wireless networks within a bounded computation time. In some examples, the bounded computation time may be budgeted based, at least in part, on a total number of radios associated with the plurality of wireless networks. For example, if the bounded computation time for performing the optimization operation is bounded at Y hours, and if the summation of the optimization time budget for each network is greater than Y, the optimization time budget for each wireless network may be prorated such that the total computation time to perform the optimization on the plurality of wireless networks is bounded by Y hours.

In some examples, the method 220 may include dynamically determining a simulated annealing temperature associated with the network. In such examples, the simulated annealing temperature may be based on a determined speed of cooling associated with performing a simulated annealing operation. The speed of cooling may be based, at least in part, on the stability status of the network.

In some examples, the method 220 may further include determining that the stability status of the network is stable and, responsive to determining that the network is stable, performing a first number of simulated annealing operations on the network, and/or determining that the stability status of the network is unstable and, responsive to determining that the network is unstable, performing a second number of simulated annealing operations on the network. In some examples, the first number of simulated annealing operations may be less than the second number of simulated annealing operations. For example, if the stability status is determined to be stable, fewer simulated annealing operations may be performed to optimize a configuration of the network than when the stability status is determined to unstable, in which case more simulated annealing operations may be performed to optimize the configuration of the network.

The method 220 may further include determining a time budget for performing a simulated annealing operation using the simulated annealing parameters. The time budget may comprise an amount of time in which the simulated annealing operation is to be performed. In some examples, the time budget may be based, at least in part, on the stability status of the network.

In some examples, the time budget may be an optimization time budget. The optimization time budget may be determined as a function of the number of radios and/or the number of channels in the network. A greater optimization time may be budgeted when the number of radios is greater (e.g., as the number of radios in the network increases, the optimization time budget may also be increased). In some examples, a greater optimization time may be budgeted when the number of channels is smaller (e.g., as the number of channels in the network decreases, the optimization time budget may be increased). This may be because it may be more difficult to determine an optimized channel plan when the energy is defined in terms of interference, which may be dominated by co-channel interference.

Figure 3 illustrates an example non-transitory machine-readable medium 330 consistent with the disclosure. A processing resource may execute instructions stored on the non-transitory machine readable medium 330. The non-transitory machine readable medium 330 may be any type of volatile or non-volatile memory or storage, such as random access memory (RAM), flash memory, read-only memory (ROM), storage volumes, a hard disk, or a combination thereof.

The example medium 330 may store instructions 332 executable by a processing resource to determine a stability status of a network. For example, the medium 330 may store instructions executable by the processing resource to determine if the network is exhibiting a stable stability status or an unstable stability status.

The example medium 330 may store instructions 334 executable by a processing resource to assign a time budget to the network based, at least in part, on the stability status of the network. The time budget may comprise an amount of time in which a network configuration optimization operation is to be performed. In some examples, the time budget may be based, at least in part, on a number of radios associated with the network and/or on a number of channels associated with the network.

The example medium 330 may store instructions 334 executable by a processing resource to cause performance of the network optimization operation to select a channel of the network over which to send and receive network traffic. In some examples, the example medium 330 may store instructions executable by the processing resource to cause performance of the network optimization operation based, at least in part, on a simulated annealing parameter associated with the network.

In some examples, the example medium 330 may store instructions executable by the processing resource to monitor statistics associated with radio measurements of radios associated with the network and determine the stability status based, at least in part, on the statistics associated with the radio measurements. In some examples, the example medium 330 may store instructions executable by the processing resource to monitor radios associated with a different network and determine the stability status based, at least in part, on the behavior of the radios associated with the different network.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure. As used herein, designators such as "N", etc., particularly with respect to reference numerals in the drawings, indicate that a number of the particular feature so designated can be included. A "plurality of" is intended to refer to more than one of such things.

**Claims**

1. A method, comprising:

   determining, by a network controller, a stability status of a network;
   dynamically determining a plurality of simulated annealing parameters associated with the network based, at least in part, on the stability status of the network; and
   using, at least in part, the plurality of simulated annealing parameters to optimize a network configuration.

2. The method of claim 1, wherein dynamically determining the plurality of simulated annealing parameters includes dynamically determining at least one of an energy, a distance, and a move associated the network.

3. The method of claim 1 or 2, further comprising dynamically determining a simulated annealing temperature associated with the network, wherein the simulated annealing temperature is based on:

a determined speed of cooling associated with performing a simulated annealing operation; and
the stability status of the network.

4. The method of one of the preceding claims, further comprising dynamically determining an initial state of simulated annealing based, at least in part, on the stability status of the network.

5. The method of one of the preceding claims, further comprising:

determining that the stability status of the network is stable;
responsive to determining that the network is stable, performing a first number of simulated annealing operations on the network;
determining that the stability status of the network is unstable; and
responsive to determining that the network is unstable, performing a second number of simulated annealing operations on the network, wherein

the first number of simulated annealing operations is less than the second number of simulated annealing operations.

6. The method of one of the preceding claims, further comprising determining a time budget for performing a simulated annealing operation using the simulated annealing parameters, wherein the time budget comprises an amount of time in which the simulated annealing operation is to be performed, and wherein the time budget is based, at least in part, on the stability status of the network.

7. The method of one of the preceding claims, wherein using the plurality of simulated annealing parameters to optimize the network configuration further comprises optimizing the network to select a channel of the network over which to send and receive network traffic.

8. An apparatus, comprising:

a memory resource coupled to a processing resource, wherein the processing resource is to execute instructions stored on the memory resource to cause the apparatus to:

allocate a time budget in which a network optimization operation is to be performed, wherein the time budget is based, at least in part, on a stability status of a network;
perform a plurality of simulated annealing operations during the time budget;
determine a probability of acceptance for each of the plurality of simulated annealing operations, wherein the probability of acceptance is based, at least in part, on the stability status of the network;
define a simulated annealing parameter based, at least in part, on the probability of acceptance for each of the plurality of simulated annealing operations.

9. The apparatus of claim 8, wherein the simulated annealing parameter is at least one of an initial simulated annealing temperature and a final simulated annealing temperature.

10. The apparatus of claim 8 or 9, wherein the processing resource is to further execute instructions to:

determine that the time budget has expired; and
responsive to the determination, define a simulated annealing temperature based, at least in part, on historical simulated annealing optimization data.

11. The apparatus of one of claims 8 to 10, wherein the memory resource and the processing resource are part of a network controller.

12. The apparatus of one of claims 8 to 11, wherein the processing resource is to further execute instructions to determine the stability status of the network based on at least one of an energy of an optimization solution associated with the network, a number of radios associated with the network, an age of at least one radio associated with the network, and information from monitoring radio events.

13. The apparatus of one of claims 8 to 12, wherein the processing resource is to further execute instructions to perform an operation to optimize a network configuration based, at least in part, on the simulated annealing parameter.

14. The apparatus of one of claims 8 to 13, wherein the processing resource is to further execute instructions to:

determine that the stability status of the network is stable;
responsive to the determination that the network is stable, select a first distance to perform a move operation to optimize a configuration of the network;
determine that the stability status of the network is unstable; and

**EP 3 454 589 A1**

responsive to the determination that the network is unstable, select a second distance to perform a move operation to optimize a configuration of the network,

wherein the first distance is less than the second distance.

**15.** A non-transitory machine-readable medium storing instructions executable by a processing resource to perform the method of one of claims 1 to 7.

100

104

PROCESSING
RESOURCE

102

MEMORY RESOURCE

INSTRUCTIONS

110

ALLOCATE A TIME BUDGET
IN WHICH A NETWORK
OPTIMIZATION OPERATION
IS TO BE PERFORMED,
WHEREIN THE TIME BUDGET
IS BASED, AT LEAST IN
PART, ON A STABILITY
STATUS OF A NETWORK

112

PERFORM A PLURALITY OF
SIMULATED ANNEALING
OPERATIONS DURING THE
TIME BUDGET

114

DETERMINE A PROBABILITY
OF ACCEPTANCE FOR EACH
OF THE PLURALITY OF
SIMULATED ANNEALING
OPERATIONS

116

DEFINE A SIMULATED
ANNEALING PARAMETER
BASED, AT LEAST IN PART,
ON THE PROBABILITY OF
ACCEPTANCE FOR EACH OF
THE PLURALITY OF
SIMULATED ANNEALING
OPERATIONS

106

*Figure 1*

220

DETERMINING, BY A NETWORK CONTROLLER, A STABILITY STATUS OF A NETWORK — 222

DYNAMICALLY DETERMINING A PLURALITY OF SIMULATED ANNEALING PARAMETERS ASSOCIATED WITH THE NETWORK BASED, AT LEAST IN PART, ON THE STABILITY STATUS OF THE NETWORK — 223

USING, AT LEAST IN PART, THE PLURALITY OF SIMULATED ANNEALING PARAMETERS TO OPTIMIZE A NETWORK CONFIGURATION — 224

*Figure 2*

330

NON-TRANSITORY MACHINE READABLE MEDIUM

DETERMINE A STABILITY STATUS OF A NETWORK — 332

ASSIGN A TIME BUDGET TO THE NETWORK BASED, AT LEAST IN PART, ON THE STABILITY STATUS OF THE NETWORK, WHEREIN THE TIME BUDGET COMPRISES AN AMOUNT OF TIME IN WHICH A NETWORK CONFIGURATION OPTIMIZATION OPERATION IS TO BE PERFORMED — 334

CAUSE PERFORMANCE OF THE NETWORK OPTIMIZATION OPERATION TO SELECT A CHANNEL OF THE NETWORK OVER WHICH TO SEND AND RECEIVE NETWORK TRAFFIC — 336

*Figure 3*

Europäisches
Patentamt

European
Patent Office

Office européen
des brevets

# EUROPEAN SEARCH REPORT

Application Number

EP 17 19 8956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/165462 A1 (TAN YONGXI [US] ET AL) 9 June 2016 (2016-06-09) | 1-6,8-15 | INV. H04W24/02 |
| Y | * paragraph [0012] *<br>* paragraph [0067] - paragraph [0070] *<br>* paragraph [0083] - paragraph [0099] *<br>* paragraph [0168] *<br>* figures 3,5 * | 7 | ADD. H04W16/02 |
| X | WO 2016/095826 A1 (HUAWEI TECH CO LTD [CN]) 23 June 2016 (2016-06-23) | 1-6,8-15 | |
| Y | * paragraph [0048] *<br>* paragraph [0103] - paragraph [0117] *<br>* paragraph [0125] * | 7 | |
| Y | NOVILLO FRANCISCO ET AL: "Centralized channel assignment algorithm for OSA-enabled WLANs based on simulated annealing",<br>2015 7TH IEEE LATIN-AMERICAN CONFERENCE ON COMMUNICATIONS (LATINCOM), IEEE,<br>4 November 2015 (2015-11-04), pages 1-6,<br>XP032877489,<br>DOI: 10.1109/LATINCOM.2015.7430136<br>[retrieved on 2016-03-09] | 7 | TECHNICAL FIELDS SEARCHED (IPC)<br><br>H04W |
| A | * abstract *<br>* Introduction and paragraph III * | 1-6,8-15 | |
| A | OSIANOH GLENN ALIU ET AL: "A Survey of Self Organisation in Future Cellular Networks",<br>IEEE COMMUNICATIONS SURVEYS AND TUTORIALS, INSTITUTE OF ELECTRICAL AND ELECTRONICS ENGINEERS, US,<br>vol. 15, no. 1,<br>1 January 2013 (2013-01-01), pages 336-361, XP011493340,<br>ISSN: 1553-877X, DOI: 10.1109/SURV.2012.021312.00116<br>* Introduction * | 1-15 | |

The present search report has been drawn up for all claims

| Place of search | Date of completion of the search | Examiner |
|---|---|---|
| Munich | 9 May 2018 | Allot, Corentin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 19 8956

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2018

| Patent document cited in search report | Publication date | Patent family member(s) | Publication date |
|---|---|---|---|
| US 2016165462 A1 | 09-06-2016 | NONE | |
| WO 2016095826 A1 | 23-06-2016 | CN 107113635 A | 29-08-2017 |
| | | EP 3225046 A1 | 04-10-2017 |
| | | WO 2016095826 A1 | 23-06-2016 |

EPO FORM P0459

For more details about this annex : see Official Journal of the European Patent Office, No. 12/82